# EUROPEAN PATENT SPECIFICATION

(11) **EP 4 653 815 B1**
(45) Date of publication and mention of the grant of the patent: **18.11.2026**
(21) Application number: 25172816.8
(22) Date of filing: 28.04.2025
(51) Int. Cl.: G01C 21/00, G01C 21/20, G06T 7/30

(54) **CROSS-MODE IMAGE CORRELATION SURFACE LOCATION SYSTEM**
SYSTEM ZUR LOKALISIERUNG EINER BILDKORRELATIONSOBERFLÄCHE ÜBER KREUZMODUS
SYSTÈME DE LOCALISATION DE SURFACE DE CORRÉLATION D'IMAGE EN MODE CROISÉ

(30) Priority: 22.05.2024 US 202418671509
(43) Date of publication of application: 26.11.2025
(73) Proprietor: Honeywell International Inc., Charlotte, NC 28202 (US)
(72) Inventor: FISHER, Zachary, Charlotte, 28202 (US); STAACK, Hunter, Charlotte, 28202 (US); SWEENEY, Kevin, Charlotte, 28202 (US)
(74) Representative: Haseltine Lake Kempner LLP

(56) References cited:
- US-A1- 2016 350 927
- ZHENG AIHUA ET AL: "Visible-infrared person re-identification via specific and shared representations learning", VISUAL INTELLIGENCE, vol. 1, no. 1, 5 December 2023 (2023-12-05), XP093321968, ISSN: 2731-9008, DOI: 10.1007/s44267-023-00032-9
- KUGLIN C D ET AL: "THE PHASE CORRELATION IMAGE ALIGNMENT METHOD", PROCEEDINGS OF THE INTERNATIONAL CONFERENCE ON CYBERNETICS ANDSOCIETY, XX, XX, 1 September 1975 (1975-09-01), pages 163 - 165, XP000956120
- "Image Processing and Communications Challenges 4", vol. 184, 1 January 2013, SPRINGER BERLIN HEIDELBERG, ISBN: 978-3-642-32384-3, ISSN: 2194-5357, article KLIMASZEWSKI JAN ET AL: "Registration of Infrared and Visible Images Based on Edge Extraction and Phase Correlation Approaches", pages: 153 - 162, XP093321916, DOI: 10.1007/978-3-642-32384-3_19

## Description

### BACKGROUND

One common system used for determining a location of a vehicle is with a global navigation satellite system (GNSS) such as a global positioning system (GPS). There are times, however, where a GPS is not available or is unreliable because the system is being spoofed. One method of determining a location, without GPS, is by taking an image in front of or under the vehicle and comparing the images stored in an image location database to determine if any of the content in the images match. If enough content in the images match within a select certainty, the location may be determined.

For a vehicle to operate both in the day and in the night, images from an infrared spectrum camera may be used. Images stored in an image location database, however, are usually taken and stored in the visible spectrum. For example, satellite map reference images taken in the visual spectrum are commonly used in image location databases. Comparing different types of images for like content may cause problems that can lead to inaccurate location determinations. The problem comes from a visual dissimilarity of the earth's surface when viewed in thermal infrared versus the visible spectrum. The visual dissimilarity poses a challenge in algorithmically correlating two images due to their content differences. For example, a strong image inversion exists between two images comparing asphalt, because an asphalt road looks dark in the visible spectrum but on a hot day it may look light in the thermal infrared spectrum. These visual dissimilarities can lead to an inaccurate comparison.

For the reasons stated above and for other reasons stated below which will become apparent to those skilled in the art upon reading and understanding the present specification, there is a need in the art for an effective and efficient way to compare visible and infrared images.

US2016/350927A1 relates to navigation systems, and more particularly to a system and method to adjust a navigation system via cross spectral feature correlation between images having different spectral content.

ZHENG AIHUA ET AL: "Visible-infrared person re-identification via specific and shared representations learning", VISUAL INTELLIGENCE, vol. 1, no. 1, 5 December 2023, proposes a specific and shared representations learning (SSRL) model for VI-ReID to mitigate the discrepancy between heterogeneous pedestrian images while better capturing modality-invariant and modality-specific representations.

KUGLIN C D ET AL: "THE PHASE CORRELATION IMAGE ALIGNMENT METHOD", PROCEEDINGS OF THE INTERNATIONAL CONFERENCE ON CYBERNETICS ANDSOCIETY, 1 September 1975, pages 163 -165, proposes a correlation method based upon the inverse Fourier transform of the phase difference between two images.

Klimaszewski Jan ET AL: "Registration of Infrared and Visible Images Based on Edge Extraction and Phase Correlation Approaches", In: "Image Processing and Communications Challenges 4", 1 January 2013 (2013-01-01), Springer Berlin Heidelberg, pages 153 - 162, presents test results of several edge detectors intended to be used for multimodal image registration.

### SUMMARY

The following summary is made by way of example and not by way of limitation. It is merely provided to aid the reader in understanding some of the aspects of the subject matter described. Embodiments provide a system that compares cross-modal images, such as infrared and visible spectrum images, through phase correlation.

In one embodiment, a cross-mode image correlation surface location system is provided. The system includes an infrared camera to capture an infrared image, a database, and a controller. Ther database stores images in a visible spectrum and location information associated with each stored image in the database. The controller is configured to select a stored image of the stored images in the database when the infrared camera captures the infrared image. Selection of the stored image of the stored images is based on an estimated location of a vehicle that includes the infrared camera. The controller is configured to convert the selected stored image into a grayscale image. The controller is further configured to determine an absolute correlation surface between the captured infrared image from the infrared camera and the grayscale image. The controller is configured to determine a maximum first peak value in the determined absolute correlation surface to verify a peak correlation location between an aspect in the captured infrared image from the infrared camera and the grayscale image from the selected stored image. The controller is further configured to update a navigation system of the vehicle based on the peak correlation location associated with the determined maximum first peak value.

In another embodiment, a system comprising a cross-mode image correlation surface location system and a navigation system is provided. The cross-mode image correlation surface location system includes an infrared camera to capture an infrared image, a database, and a controller. The database stores images in a visible spectrum and location information associated with each stored image in the database. The controller is configured to select a stored image of the stored images in the database when the infrared camera captures the infrared image. The selecting of the stored image of the stored images is based on an estimated location of a vehicle that includes the infrared camera. The controller is configured to convert the selected stored image into a grayscale image. The controller is also configured to determine an absolute correlation surface between the captured infrared image from the infrared camera and the grayscale image. The controller is configured to determine a maximum first peak value in the determined absolute correlation surface. The navigation system is in communication with the controller. The navigation system is configured to update a navigation output based on a peak correlation location associated with the determined maximum first peak value.

In still another embodiment, a method of using a cross-mode image correlation surface location system is provided. The method includes capturing an infrared image with an infrared camera; estimating a location of a vehicle that includes the infrared camera when the infrared image was taken; retrieving a visual spectrum image from a database based on the estimated location; converting the visual spectrum image into a grayscale image; determining an absolute correlation surface between the grayscale image and the infrared image; identifying a maximum first peak value in the determined absolute correlation surface; and using information gathered by the identifying of the maximum first peak value to update a navigation system of the vehicle.

### BRIEF DESCRIPTION OF THE DRAWINGS

The present invention can be more easily understood and further advantages and uses thereof will be more readily apparent, when considered in view of the detailed description and the following figures in which:
Figure 1 is a block diagram of a vehicle with the cross-mode image correlation surface location system according to an example aspect of the present invention;
Figure 2A illustrates an example infrared camera image;
Figure 2B illustrates a grayscale conversion of the visible spectrum map according to an example aspect of the present invention;
Figure 3A illustrates a translation correlation surface between a camera image and a map image according to an example aspect of the present invention;
Figure 3B illustrates an absolute value of the translation correlation surface of Figure 3A between a camera image and a map image according to an example aspect of the present invention;
Figure 3C further illustrates the applying the absolute value of Figure 3B to the translation correlation surface of Figure 3A according to an example aspect of the present invention; and
Figure 4 illustrates a cross-mode image correlation surface location flow diagram according to an example aspect of the present invention.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

Embodiments of the present invention provide a system that effectively compares cross-mode images such as infrared and visible spectrum images through phase correlation. In embodiments, an absolute value of a phase correlation is used to determine an "absolute correlation surface." From the absolute correlation surface, at least a maximum peak value is determined in an example. The maximum peak value is used, in examples, to determine a peak correlation location that may be used as described herein for navigation purposes. In another example, a second maximum peak value is used as a quality metric.

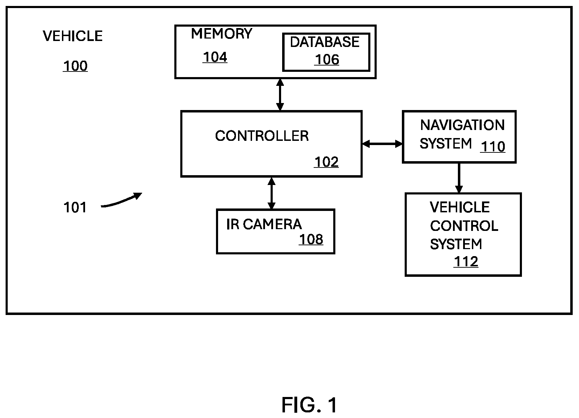

A block diagram of a vehicle with a cross-mode image correlation surface location system 101 that is implemented by a vehicle 100 according to an example aspect of the present invention is illustrated in Figure 1. The cross-mode image correlation surface location system 101 includes a controller 102, a memory 104, and an infrared (IR) camera 108.

In general, the controller 102 may include any one or more of a processor, microprocessor, a digital signal processor (DSP), an application specific integrated circuit (ASIC), a field program gate array (FPGA), or equivalent discrete or integrated logic circuitry. In some example embodiments, controller may include multiple components, such as any combination of one or more microprocessors, one or more controllers, one or more DSPs, one or more ASICs, one or more FPGAs, as well as other discrete or integrated logic circuitry. The functions attributed to controller 102 herein may be embodied as software, firmware, hardware or any combination thereof. Controller 102 may be part of a system controller or a component controller. Memory 104 may include computer-readable operating instructions that, when executed by the controller 102 provides functions of the cross-mode image correlation surface location system 101. Such functions may include the functions of determining a correlation surface and an absolute correlation surface described below. The computer readable instructions may be encoded within the memory. Memory is an appropriate non-transitory storage medium or media including any volatile, nonvolatile, magnetic, optical, or electrical media, such as, but not limited to, a random-access memory (RAM), read-only memory (ROM), non-volatile RAM (NVRAM), electrically-erasable programmable ROM (EEPROM), flash memory, or any other storage medium.

The memory 104 in this example includes an image database 106. Image database 106 includes images associated with location information. Although image database 106 is illustrated as being located in memory 104, image database 106 may be in another location. Example images stored in image database 106 are satellite images in the visual spectrum. As discussed, database 106 includes location information associated with each image in the database. The location information may include location information associated with features captured within each image in the image database.

In one example, the controller 102, which is in communication with the IR camera 108, controls the IR camera 108 to take IR images. The controller 102 is further in communication with a navigation system 110 in this example. The navigation system 110 may include a global navigation satellite system (GNSS) such as a global positioning system (GPS). Further, the navigation system 110 may include other systems used to determine a location such as an inertial navigation system (INS), star tracker, etc. In another example, the image-based location system is the sole navigation system. Further, in an example, at least the controller 102 may be part of the navigation system 110.

The example of Figure 1 further illustrates a vehicle control system 112. The vehicle control system 112 controls the operation of the vehicle 100 including the direction the vehicle 100 is traveling. In one example, the vehicle control system 112 controls the vehicle 100 based at least in part on a determined location from the cross-mode image correlation surface location system 101.

**In** an example, controller 102 instructs the IR camera 108 to take an image. The controller, based on an estimated location of the vehicle, retrieves a stored image from database 106 that is associated with the estimated location. The estimated location may be determined with another location determining system such as, but not limited, GPS/INS system, star tracker, dead reckoning, etc. One example application is where the GPS signals in a GPS/INS system are unavailable or compromised, estimated location information from the INS may be used to provide the estimated location to identify an associated image in database 106. Further, in an avionic example, the use of a flight plan, time of travel, and rate of travel may be used to estimate the general location that can be used to retrieve an associated image.

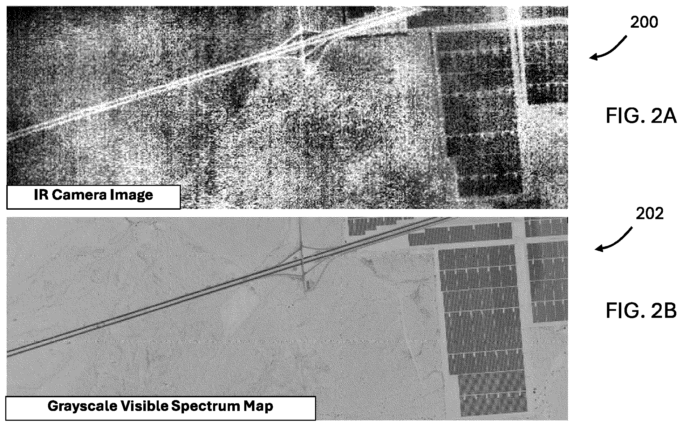

Example of an IR camera image 200 taken by the IR camera 108 is illustrated in Figure 2A. As discussed above, images stored in database 106 are typically satellite images in the visible spectrum. An image in database 106 may be converted to grayscale by controller 102. An example of a visible spectrum image from database 106 that is converted to a grayscale image, is grayscale image 202 of Figure 2B. Grayscale image 202 covers the same location that the IR camera image 200 of Figure 2A covers for comparison.

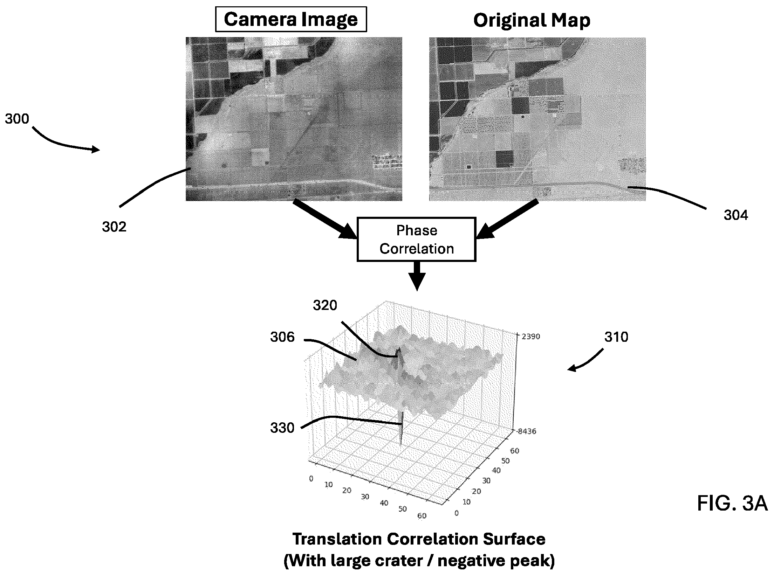

Figure 3A illustrates a phase correlation process 300 using an IR camera image 302 and a database image 304 from database 106 that has been converted to grayscale. The result of the phase correlation is a translation correlation surface 306 illustrated in a translation correlation surface graph 310. The translation correlation surface 306 of the translation correlation surface graph 310 includes positive peak 320 and a negative peak 330 that indicates a correlation within the IR camera image 302 and the database image 304.

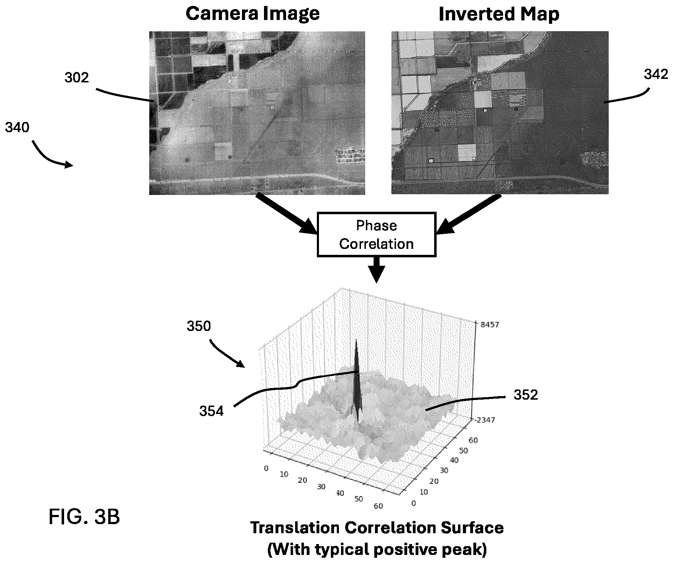

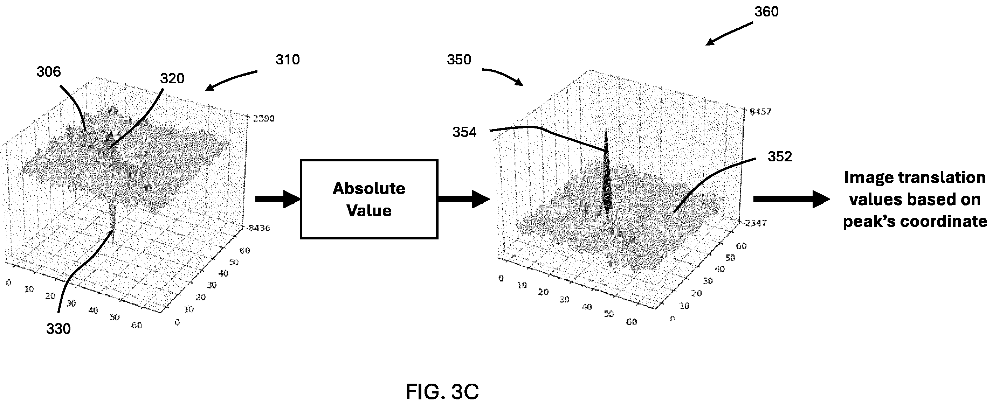

Figure 3B illustrates an inverted phase correlation process 340 using the IR camera image 302 and an inverted database image 342. By inverting the database image and then conducting the phase correlation, a translation correlation surface is generated as illustrated in the translation correlation surface graph 350. By using the inverted database image 342, the negative peak (negative peak 330 of Figure 3A) becomes positive, adding onto the already positive peak (positive peak 320 of Figure 3A) resulting in an increased positive peak 354 that is easy to identify or detect. The effect of using the absolute value to identify a peak correlation is further illustrated in the correlation difference illustration 360 in Figure 3C. As illustrated, while the translation correlation surface graph 310 includes positive peak 320 and a negative peak 330, the absolute translation correlation surface graph 350 includes one greater positive peak 354. The absolute correlation surface 352 includes image translation values based on peak's coordinate to locate the position of the feature.

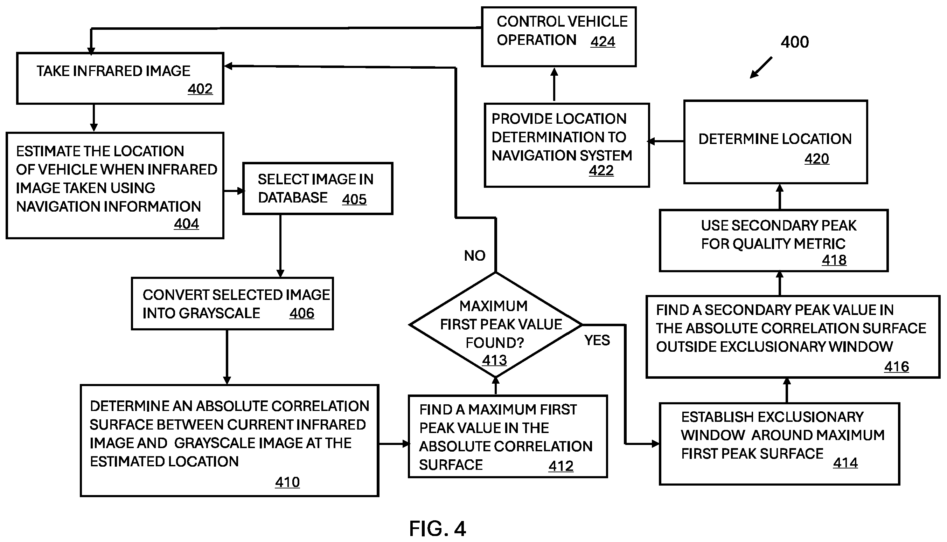

Referring to Figure 4, a method of implementing a cross-mode image correlation surface location system is provided in a cross-mode image correlation surface location flow diagram 400. The cross-mode image correlation surface location flow diagram 400 is provided in a sequential series of blocks. At least some of the blocks are conducted by controller 102 implementing operating instruction stored in memory 104. The sequence of blocks may, however, occur in a different order or in parallel in other examples. Hence, the invention is not limited to a specific sequential series of blocks.

In the example cross-mode image correlation surface location flow diagram 400, the process starts at block 402 where an IR image is captured. In one example, the IR image is captured with an IR camera under the direction of controller 102. The location of the vehicle is estimated at block 404 when the IR image is captured in block 402. As discussed above, the estimated location may be determined with a location determining system such as, but not limited to, GPS/INS system, star tracker, dead reckoning, travel path tracker system, etc. that is part of the navigation system 110. An image in database 106 is selected that is associated with the estimated location determined in block 405.

The selected image in database 106 is converted into grayscale at block 406. The selected image may be a satellite image in one example. At block 410 the absolute correlation surface between the current IR image and the grayscale image from the database is determined.

Once, the absolute correlation surface is determined at block 410, a maximum first peak value in the absolute correlation surface is identified at block 412. It is determined at block 413 if a maximum first peak value has been found. If one cannot be found, the process continues at block 402 taking another IR image. In one example, once a maximum first peak value is found at block 413, an exclusionary window around the maximum first peak surface is established at block 414. A second or secondary peak value, that is outside the exclusionary window, is found or determined at block 416. The secondary peak value is less than the maximum first peak surface.

At block 418, the secondary peak value is used for a quality metric to help verify the location determined by the first maximum peak. The location of the vehicle 100 is determined at block 420 based on the maximum first peak value, verified with the second peak value. In one example, a peak correlation location that is associated with matching content that caused the maximum first peak value in the absolute correlation surface is used to determine the location of the vehicle. 100.

The determined location is provided to the navigation system, in this example, at block 422. In one example, information gathered by identifying the maximum first peak, including the determined location, is used to update the navigation system 110. The navigation system 110 may be updated by the determined location by verifying the estimated location. In another example, the navigation system 110 may be updated by calibrating the navigation system 110. Further in an example, the navigation system 110 is updated by changing an output location of the navigation system 110 to the determined location.

Further in another example, the vehicle is operationally controlled by the vehicle control system 112 based at least in part by the determined location by the cross-mode image correlation surface location system at block 424. As discussed above, the vehicle control system 112 may control the direction of travel of the vehicle 100. The process then continues at block 402 where another infrared image is taken.

## Claims

1. A cross-mode image correlation surface location system (101), the system (101) comprising:
an infrared camera (108) to capture an infrared image;
a database (106) storing images in a visible spectrum and location information associated with each stored image in the database (106); and
a controller (102) configured to select a stored image of the stored images in the database (108) when the infrared camera (108) captures the infrared image, the selecting of the stored image of the stored images being based on an estimated location of a vehicle (100) that includes the infrared camera (108), the controller (102) configured to convert the selected stored image into a grayscale image, the controller (102) also configured to determine an absolute correlation surface between the captured infrared image from the infrared camera (108) and the grayscale image, the controller (102) configured to determine a maximum first peak value in the determined absolute correlation surface, the controller (102) further configured to update a navigation system (112) of the vehicle (100) based on a peak correlation location associated with the determined maximum first peak value.

2. The system (101) of claim 1, further comprising:
a memory (104) in communication with the controller, the memory (104) storing operating instructions implemented by the controller (102).

3. The system (101) of claim 1, further comprising:
a vehicle control system (112) configured to control operations of the vehicle (100) based at least in part on the peak correlation location associated with the determined maximum first peak value.

4. The system (101) of claim 1, wherein the updating of the navigation system (110) includes at least one of verifying the estimated location, calibrating the navigation system (110), and using the peak correlation location in determining a navigation system location.

5. The system of claim 1, wherein the controller (101) is further configured to establish an exclusionary window around the peak correlation location in the absolute correlation surface, the controller further configured to find a second peak value in the absolute correlation surface outside the exclusionary window and using a second peak location associated with the second peak value for a quality metric.

6. A method of using a cross-mode image correlation surface location system, the method comprising:
capturing an infrared image with an infrared camera (108);
estimating a location of a vehicle (100) that includes the infrared camera (108) when the infrared image was taken;
retrieving a visual spectrum image from a database (106) based on the estimated location;
converting the visual spectrum image into a grayscale image;
determining an absolute correlation surface between the grayscale image and the infrared image;
identifying a maximum first peak value in the determined absolute correlation surface; and
using information gathered by the identifying of the maximum first peak value to update a navigation system (110) of the vehicle (100).

7. The method of claim 6, further comprising;
controlling vehicle operations based on the identified maximum first peak value.

8. The method of claim 6, further comprising:
establishing an exclusionary window around the identified first peak value.

9. The method of claim 8, further comprising:
identifying a secondary peak value in the absolute correlation surface outside of the exclusionary window.

10. The method of claim 9, further comprising:
using the secondary peak value for a quality metric.

## Patentansprüche

1. Kreuzmodus-Bildkorrelationsflächen-Standortsystem (101), das System (101) umfassend:
eine Infrarotkamera (108), um ein Infrarotbild aufzunehmen;
eine Datenbank (106), die Bilder in einem sichtbaren Spektrum und Standortinformationen, die jedem in der Datenbank (106) gespeicherten Bild zugehörig sind, speichert; und
eine Steuerung (102), die dazu konfiguriert ist, ein gespeichertes Bild aus den in der Datenbank (108) gespeicherten Bildern auszuwählen, wenn die Infrarotkamera (108) das Infrarotbild aufnimmt, wobei das Auswählen des gespeicherten Bildes aus den gespeicherten Bildern auf einem geschätzten Standort eines Fahrzeugs (100) basiert, das die Infrarotkamera (108) beinhaltet, wobei die Steuerung (102) dazu konfiguriert ist, das ausgewählte gespeicherte Bild in ein Graustufenbild zu konvertieren, wobei die Steuerung (102) auch dazu konfiguriert ist, eine absolute Korrelationsfläche zwischen dem aufgenommenen Infrarotbild von der Infrarotkamera (108) und dem Graustufenbild zu bestimmen, wobei die Steuerung (102) dazu konfiguriert ist, einen maximalen ersten Spitzenwert in der bestimmten absoluten Korrelationsfläche zu bestimmen, wobei die Steuerung (102) ferner dazu konfiguriert ist, ein Navigationssystem (112) des Fahrzeugs (100) auf Basis eines Spitzenkorrelation-Standorts, der dem bestimmten maximalen ersten Spitzenwert zugehörig ist, zu aktualisieren.

2. System (101) nach Anspruch 1, ferner umfassend:
einen Speicher (104) in Kommunikation mit der Steuerung, wobei der Speicher (104) Betriebsanweisungen speichert, die von der Steuerung (102) implementiert werden.

3. System (101) nach Anspruch 1, ferner umfassend:
ein Fahrzeugsteuersystem (112), das dazu konfiguriert ist, Vorgänge des Fahrzeugs (100) mindestens teilweise auf Basis des Spitzenkorrelation-Standorts, der dem bestimmten maximalen ersten Spitzenwert zugehörig ist, zu steuern.

4. System (101) nach Anspruch 1, wobei das Aktualisieren des Navigationssystems (110) mindestens eines von Überprüfen des geschätzten Standorts, Kalibrieren des Navigationssystems (110) und Verwenden des Spitzenkorrelation-Standorts beim Bestimmen des Navigationssystem-Standorts beinhaltet.

5. System nach Anspruch 1, wobei die Steuerung (101) ferner dazu konfiguriert ist, ein ausschließendes Fenster um den Spitzenkorrelation-Standort herum in der absoluten Korrelationsfläche zu erstellen, wobei die Steuerung ferner dazu konfiguriert ist, einen zweiten Spitzenwert in der absoluten Korrelationsfläche außerhalb des ausschließenden Fensters und unter Verwendung eines zweiten Spitzenstandorts, der dem zweiten Spitzenwert zugehörig ist, für eine Qualitätsmetrik zu finden.

6. Verfahren zum Verwenden eines Kreuzmodus-Bildkorrelationsflächen-Standortsystems, das Verfahren umfassend:
Aufnehmen eines Infrarotbildes mit einer Infrarotkamera (108);
Schätzen eines Standorts eines Fahrzeugs (100), das die Infrarotkamera (108) beinhaltet, als das Infrarotbild aufgenommen wurde;
Abrufen eines Bildes des visuellen Spektrums aus einer Datenbank (106) auf Basis des geschätzten Standorts;
Konvertieren des Bildes des visuellen Spektrums in ein Graustufenbild;
Bestimmen einer absoluten Korrelationsfläche zwischen dem Graustufenbild und dem Infrarotbild;
Identifizieren eines maximalen ersten Spitzenwerts in der bestimmten absoluten Korrelationsfläche; und
Verwenden von durch das Identifizieren des maximalen ersten Spitzenwerts gesammelten Informationen, um ein Navigationssystem (110) des Fahrzeugs (100) zu aktualisieren.

7. Verfahren nach Anspruch 6, ferner umfassend:
Steuern von Fahrzeugvorgängen auf Basis des identifizierten maximalen ersten Spitzenwerts.

8. Verfahren nach Anspruch 6, ferner umfassend:
Erstellen eines ausschließenden Fensters um den identifizierten ersten Spitzenwert herum.

9. Verfahren nach Anspruch 8, ferner umfassend:
Identifizieren eines sekundären Spitzenwerts in der absoluten Korrelationsfläche außerhalb des ausschließenden Fensters.

10. Verfahren nach Anspruch 9, ferner umfassend:
Verwenden des sekundären Spitzenwerts für eine Qualitätsmetrik.

## Revendications

1. Système de localisation à surface de corrélation d'images en mode croisé (101), le système (101) comprenant :
une caméra infrarouge (108) destinée à capturer une image infrarouge ;
une base de données (106) stockant des images dans un spectre visible et des informations de localisation associées à chaque image stockée dans la base de données (106) ; et
un contrôleur (102) configuré pour sélectionner une image stockée parmi les images stockées dans la base de données (108) lorsque la caméra infrarouge (108) capture l'image infrarouge, la sélection de l'image stockée parmi les images stockées étant basée sur une localisation estimée d'un véhicule (100) qui inclut la caméra infrarouge (108), le contrôleur (102) configuré pour convertir l'image stockée sélectionnée en une image en niveaux de gris, le contrôleur (102) également configuré pour déterminer une surface de corrélation absolue entre l'image infrarouge capturée par la caméra infrarouge (108) et l'image en niveaux de gris, le contrôleur (102) configuré pour déterminer une valeur maximale du premier pic dans la surface de corrélation absolue déterminée, le contrôleur (102) en outre configuré pour mettre à jour un système de navigation (112) du véhicule (100) sur la base d'une localisation de corrélation de pic associée à la valeur maximale du premier pic déterminée.

2. Système (101) selon la revendication 1, comprenant en outre :
une mémoire (104) en communication avec le contrôleur, la mémoire (104) stockant des instructions de fonctionnement mises en œuvre par le contrôleur (102).

3. Système (101) selon la revendication 1, comprenant en outre :
un système de commande de véhicule (112) configuré pour commander des opérations du véhicule (100) sur la base, au moins en partie, de la localisation de corrélation de pic associée à la valeur maximale du premier pic déterminée.

4. Système (101) selon la revendication 1, dans lequel la mise à jour du système de navigation (110) inclut au moins l'un parmi la vérification de la localisation estimée, l'étalonnage du système de navigation (110), et l'utilisation de la localisation de corrélation de pic pour déterminer une localisation de système de navigation.

5. Système selon la revendication 1, dans lequel le contrôleur (101) est en outre configuré pour établir une fenêtre d'exclusion autour de la localisation de corrélation de pic dans la surface de corrélation absolue, le contrôleur étant en outre configuré pour trouver une valeur du deuxième pic dans la surface de corrélation absolue en dehors de la fenêtre d'exclusion et pour utiliser une localisation du deuxième pic associée à la valeur du deuxième pic pour une métrique de qualité.

6. Procédé d'utilisation d'un système de localisation à surface de corrélation d'images en mode croisé, le procédé comprenant :
la capture d'une image infrarouge à l'aide d'une caméra infrarouge (108) ;
l'estimation d'une localisation d'un véhicule (100) qui inclut la caméra infrarouge (108) au moment où l'image infrarouge a été prise ;
la récupération d'une image en spectre visuel à partir d'une base de données (106) sur la base de la localisation estimée ;
la conversion de l'image en spectre visuel en une image en niveaux de gris ;
la détermination d'une surface de corrélation absolue entre l'image en niveaux de gris et l'image infrarouge ;
l'identification d'une valeur maximale du premier pic dans la surface de corrélation absolue déterminée ; et
l'utilisation des informations recueillies par l'identification de la valeur maximale du premier pic pour mettre à jour un système de navigation (110) du véhicule (100).

7. Procédé selon la revendication 6, comprenant en outre :
la commande d'opérations du véhicule sur la base de la valeur maximale du premier pic identifiée.

8. Procédé selon la revendication 6, comprenant en outre :
l'établissement d'une fenêtre d'exclusion autour de la valeur du premier pic identifiée.

9. Procédé selon la revendication 8, comprenant en outre :
l'identification d'une valeur de pic secondaire dans la surface de corrélation absolue en dehors de la fenêtre d'exclusion.

10. Procédé selon la revendication 9, comprenant en outre :
l'utilisation de la valeur de pic secondaire pour une métrique de qualité.
